(19) Europäisches Patentamt
European Patent Office
Office européen des brevets

(11) EP 4 746 003 A1

(12) EUROPEAN PATENT APPLICATION
published in accordance with Art. 153(4) EPC

(43) Date of publication:
**20.05.2026 Bulletin 2026/21**

(21) Application number: **24839828.1**

(22) Date of filing: **12.07.2024**

(51) International Patent Classification (IPC):
***H01F 1/08*** *(2006.01)* ***C08G 59/68*** *(2006.01)*
***H01F 41/02*** *(2006.01)*

(52) Cooperative Patent Classification (CPC):
**C08G 59/68; H01F 1/08; H01F 41/02**

(86) International application number:
**PCT/JP2024/025356**

(87) International publication number:
**WO 2025/013940 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.07.2023 JP 2023115157**

(71) Applicant: **Asahi Kasei Kabushiki Kaisha**
**Tokyo 100-0006 (JP)**

(72) Inventors:
- **MIZUGUCHI, Takuya**
**Tokyo 100-0006 (JP)**
- **TSUKUDA, Shinnosuke**
**Tokyo 100-0006 (JP)**

(74) Representative: **Hoffmann Eitle**
**Patent- und Rechtsanwälte PartmbB**
**Arabellastraße 30**
**81925 München (DE)**

(54) **COMPOUND, VARNISH, BOND MAGNET, AND MOTOR**

(57) Provided is a compound including an epoxy resin (A), a magnetic particle (C), and a curing agent (D), wherein in differential scanning calorimetry, when an exothermic peak temperature in a calorimetric curve at a temperature increase rate of 2°C/min of the compound is defined as (X), and an exothermic peak temperature in a calorimetric curve at a temperature increase rate of 2°C/min after the compound is pressurized at 200 MPa for 5 minutes is defined as (Y), (X) and (Y) satisfy the following expression (1) and expression (2): $100 \leq (X) \leq 200$ ... (1), and $(X) - (Y) \geq 3$ ... (2).

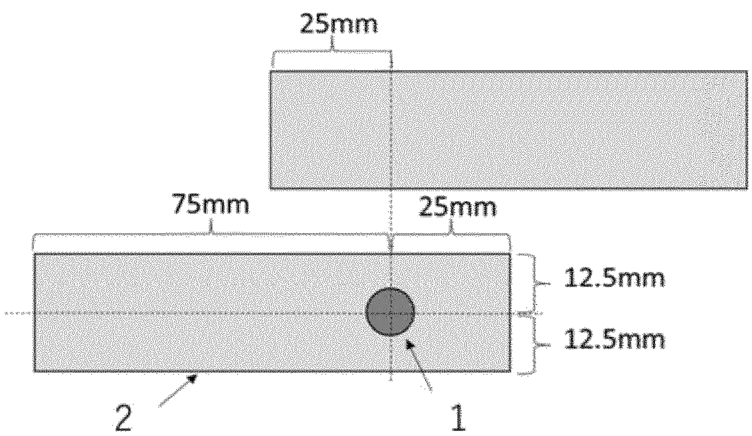


FIG.1

EP 4 746 003 A1

## Description

### Technical Field

The present invention relates to a compound, a varnish, a bonded magnet, and a motor.

### Background Art

Molded products obtained by mixing magnetic particles with a binder such as a resin component and processing the mixture into a predetermined shape is called bonded magnets. The bonded magnets, because of containing the resin component, have a high degree of freedom of shape and are superior in moldability to sintered magnets. Therefore, their application are expanded to motor applications in automobiles, general home appliances, communication or audio equipment, medical equipment, general industrial equipment, and the like.
Meanwhile, an elevated number of motor rotations in anticipation of higher output is expected for these motors. The bonded magnets, which receive strong centrifugal force, tend to be required to have high anchorage strength for metal members.
Patent Literature 1 discloses that in a compound for a bonded magnet containing an epoxy resin, a curing agent, a curing accelerator, and a magnetic powder, the accelerator has a borane structure and a borate structure, thereby providing a resin compound for a bonded magnet excellent in preservation stability and mechanical strength.

### Citation List

### Patent Literature

Patent Literature 1: Japanese Patent No. 6606908

### Summary of Invention

### Technical Problem

Molding methods of bonded magnets are classified into compression molding and injection molding. These bonded magnets are formed by mixing magnetic particles with a binder such as a resin component and molding the resulting composite material "compound" by the application of heat or pressure. The compound for compression molding is excellent in heat resistance because a thermosetting resin is used as the resin component. On the other hand, the curing reaction of the resin component progresses even during storage or preservation of the compound, resulting in problems associated with storage stability in many cases. The compression molding requires heating for accelerating the curing reaction of the thermosetting resin. However, the magnetic particles in the compound are heat-labile, and magnetic particle surface is oxidized in a heating environment, easily causing reduction in magnetic characteristics.
Accordingly, there is a demand for a compound having high anchorage strength for a metal member in the reaction of a thermosetting resin under a low-temperature condition (e.g., 150°C or lower).
By contrast, a compound containing a curing accelerator having a borane structure and borate structure as disclosed in the literature described above has a given effect on storage stability, however, has a room for improvement in anchorage strength for a metal member in the curing reaction of a thermosetting resin under a lower-temperature condition.
An object of the present invention is to provide a compound that has excellent storage stability and also exhibits high anchorage strength for a metal member in the curing reaction of a thermosetting resin under a low-temperature condition.

### Solution to Problem

The present inventors have conducted diligent studies to attain the object mentioned above, and consequently completed the present invention by finding that the problems of the conventional techniques mentioned above can be solved by using a compound containing an epoxy resin, a magnetic particle, and a curing agent, wherein a calorimetric curve obtained from differential scanning calorimetry satisfies a predetermined relationship.
The present invention includes the following aspects.

<1> A compound including an epoxy resin (A), a magnetic particle (C), and a curing agent (D), wherein in differential scanning calorimetry, when an exothermic peak temperature in a calorimetric curve at a temperature increase rate of

2°C/min of the compound is defined as (X), and an exothermic peak temperature in a calorimetric curve at a temperature increase rate of 2°C/min after the compound is pressurized at 200 MPa for 5 minutes is defined as (Y), (X) and (Y) satisfy the following expression (1) and expression (2):

$$100 \leq (X) \leq 200 \ldots (1),$$

and

$$(X) - (Y) \geq 3 \ldots (2).$$

<2> The compound according to <1>, wherein the curing agent (D) includes an encapsulated curing agent.
<3> The compound according to <1> or <2>, wherein a content of the curing agent (D) is 0.1 parts by mass or more and 15.0 parts by mass or less per 100 parts by mass of the epoxy resin (A).
<4> The compound according to <2> or <3>, wherein a core component of the curing agent (D) is a solid.
<5> The compound according to any one of <1> to <3>, wherein the curing agent (D) includes an amine-epoxy adduct.
<6> The compound according to <5>, wherein the amine-epoxy adduct includes an adduct of an imidazole compound and bisphenol A-type epoxy resin.
<7> The compound according to any one of <1> to <6>, further including a curing agent (B).
<8> The compound according to <7>, wherein

the curing agent (B) includes a curing agent that is in a solid state at room temperature, and
a content of the curing agent that is in a solid state at room temperature is 50% by mass or more based on the total amount of the curing agent (B).

<9> The compound according to any one of <1> to <8>, wherein the epoxy resin (A) includesa structure represented by the following formula (A1):

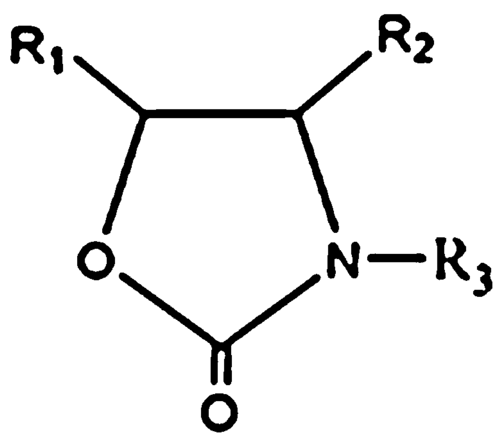

(A 1)

wherein $R_1$ to $R_3$ are each independently a hydrogen atom, an alkyl group, an aromatic group, a substituent containing a heteroatom, or a substituent containing a halogen atom, at least one of $R_1$ to $R_3$ contains a reactive group for the curing agent (D), and $R_1$ to $R_3$ are the same as or different from each other.
<10> The compound according to any one of <1> to <9>, wherein the epoxy resin (A) includes a structure represented by the following formula (A2):

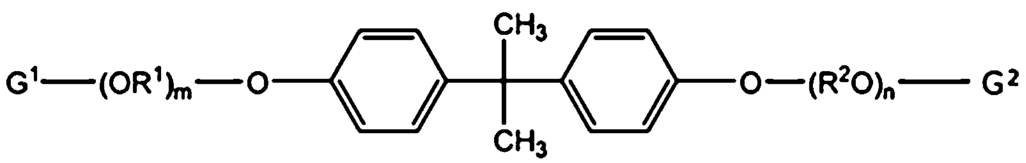

(A 2)

wherein each of $R^1$ and $R^2$ is an alkyl group having 1 to 12 carbon atoms, m and n are each independently an integer of 1 or larger, each of $G^1$ and $G^2$ is one member selected from the group consisting of a hydrogen atom, an alkyl group, an aromatic group, a substituent containing a heteroatom, and a substituent containing a halogen atom, and $G^1$ and $G^2$

are the same as or different from each other.

<11> The compound according to any one of <1> to <10>, wherein the epoxy resin (A) includes an epoxy resin that is in a solid state at room temperature, and a content of the epoxy resin that is in a solid state at room temperature is 50% by mass or more based on the total amount of the epoxy resin (A).

<12> The compound according to any one of <1> to <11>, wherein the magnetic particle (C) is a rare earth magnetic particle.

<13> A compound including an epoxy resin (A), a magnetic particle (C), and a curing agent (D), wherein the curing agent (D) is an encapsulated curing agent.

<14> The compound according to <13>, further including a curing agent (B).

<15> The compound according to <13> or <14>, wherein a core component of the curing agent (D) is a solid, the curing agent (D) includes an amine-epoxy adduct, and the amine-epoxy adduct includes an adduct of an imidazole compound and bisphenol A-type epoxy resin.

<16> A varnish including an epoxy resin (A), a curing agent (B), a curing agent (D), and an organic solvent (E), wherein the curing agent (D) includes an encapsulated curing agent, a core component of the curing agent (D) is a solid, the curing agent (D) includes an amine-epoxy adduct, and the amine-epoxy adduct includes an adduct of an imidazole compound and bisphenol A-type epoxy resin.

<17> A bonded magnet obtained by molding and curing the compound according to any one of <1> to <15>.

<18> A motor including a bonded magnet according to <17>.

## Advantageous Effect of Invention

The present invention can provide a compound that has excellent storage stability, and also exhibits high anchorage strength for a metal member in the curing reaction of a thermosetting resin under a low-temperature condition.

## Brief Description of Drawings

[Figure 1] Figure 1 is a diagram showing a test piece for anchorage strength.

## Description of Embodiments

Hereinafter, the mode for carrying out the present invention (hereinafter, simply referred to as the "present embodiment") will be described in detail.

The present embodiment given below is an illustration for describing the present invention and does not intend to limit the present invention to the contents given below.

The present invention can be carried out through appropriate changes or modifications made without departing from the spirit of the present invention.

<<Compound>>

The compound of the present embodiment includes embodiment A and embodiment B.

Hereinafter, each embodiment will be described.

<<Embodiment A>>

The compound of embodiment A is a compound including an epoxy resin (A), a magnetic particle (C), and a curing agent (D), wherein

in differential scanning calorimetry, when an exothermic peak temperature in a calorimetric curve at a temperature increase rate of 2°C/min of the compound is defined as (X), and

an exothermic peak temperature in a calorimetric curve at a temperature increase rate of 2°C/min after the compound is pressurized at 200 MPa for 5 minutes is defined as (Y),

(X) and (Y) satisfy the following expression (1) and expression (2):

$$100 \leq (X) \leq 200 \ldots (1),$$

and

$$(X) - (Y) \geq 3 \ldots (2).$$

The compound of embodiment A includes an epoxy resin (A), a magnetic particle (C), and a curing agent (D).

A mixture of the epoxy resin (A) and the curing agent (D) (hereinafter, simply referred to as a "resin composition") causes curing reaction to progress in association with heat treatment and strongly binds to the magnetic particle (C) and in addition, exerts high anchorage strength for a metal member.

(Expression (1))

In the compound of embodiment A,
in differential scanning calorimetry, when an exothermic peak temperature in a calorimetric curve at a temperature increase rate of 2°C/min of the compound is defined as (X),
(X) satisfies the following expression (1):

$$100 \leq (X) \leq 200 \ldots (1).$$

The configuration described above is satisfied, whereby the resulting compound has excellent storage stability and exhibits high anchorage strength for a metal member in the curing reaction of a thermosetting resin under a low-temperature condition. This is preferably because of the following.

An exothermic peak in differential scanning calorimetry is derived from the reaction heat of the curing reaction of the resin composition by the heating of the compound. The exothermic peak temperature (X) can be regarded as an index that indicates the reactivity of the resin composition.

When the value of (X) is 100 or more, the curing reaction of the resin composition does not progress during storage or preservation (usually at 40°C or lower) of the compound. This improves the storage stability of the compound. On the other hand, when the value of (X) is 200 or less, the curing of the resin composition sufficiently progresses even by heating under a low-temperature condition (e.g., at 150°C or lower). This improves anchorage strength for a metal member. Accordingly, the compound is required to satisfy the expression (1).

The value of the exothermic peak temperature (X) is preferably $110 \leq (X) \leq 190$, further preferably $120 \leq (X) \leq 180$, particularly preferably $130 \leq (X) \leq 170$, from the viewpoint of achieving both of storage stability and anchorage strength at the time of curing at a low temperature.

Examples of the method for controlling the exothermic peak temperature (X) include a method of adjusting the exothermic peak temperature (X) by changing the type of the curing agent and the amount of the curing agent added.

(Expression (2))

In the compound of embodiment A,

in differential scanning calorimetry, when an exothermic peak temperature in a calorimetric curve at a temperature increase rate of 2°C/min of the compound is defined as (X), and
an exothermic peak temperature in a calorimetric curve at a temperature increase rate of 2°C/min after the compound is pressurized at 200 MPa for 5 minutes is defined as (Y),
(X) and (Y) satisfy the following expression (2):

$$(X) - (Y) \geq 3 \ldots (2).$$

The configuration described above is satisfied, whereby the resulting compound has excellent storage stability and exhibits high anchorage strength for a metal member in the reaction of a thermosetting resin under a low-temperature condition. This is preferably because of the following.

A production process of a bonded magnet using a thermosetting resin progresses in the order of (1) the preparation and storage or preservation of the compound, (2) the compression molding of the compound, and (3) the thermal curing of a molded product.

Both of storage stability and anchorage strength at the time of curing at a low temperature can be achieved at high dimensions by arbitrarily controlling the reactivity of the resin composition in each step.

Specifically, these items can be achieved by suppressing the reactivity of the resin composition in (1) the preparation and storage or preservation of the compound and enhancing the reactivity of the resin composition in (2) the compression molding of the compound and (3) the thermal curing of a molded product.

The method for arbitrarily controlling the reactivity of the resin composition can involve enhancing the reactivity of

the resin composition by exploiting a pressure (usually 200 MPa or higher) to be received by the compound in a mold cavity in the step of (2) the compression molding of the compound.

The value of (X) - (Y) in the expression (2) is an index that indicates the variation range of the reactivity of the resin composition between before and after the compound is pressurized at 200 MPa for 5 minutes. A larger numeric value means that the reactivity of the resin composition is improved after pressurization. Accordingly, the compound of embodiment A is required to satisfy the expression (2).

In embodiment A, the value of (X) - (Y) in the expression (2) is preferably (X) - (Y) ≥ 5, more preferably (X) - (Y) ≥ 7, further preferably (X) - (Y) ≥ 10, when the same amount of the magnetic particle added is used in comparison, from the viewpoint of achieving both of storage stability and anchorage strength at the time of curing at a low temperature.

Examples of the method for controlling the value of (X) - (Y) include use of an encapsulated curing agent so as to improve reactivity under pressure, as mentioned above. The value can be adjusted depending on the types of the epoxy resin and the curing agent. For example, the value tends to be increased by containing solid components as the epoxy resin and the curing agent. In addition, the value tends to be increased by increasing the amount of the magnetic particle added.

<Epoxy resin (A)>

The compound of embodiment A includesan epoxy resin.

Examples of the epoxy resin include, but are not limited to, biphenyl-type epoxy resin, stilbene-type epoxy resin, diphenylmethane-type epoxy resin, sulfur atom-containing epoxy resin, novolac-type epoxy resin such as phenol novolac-type epoxy resin, cresol novolac-type epoxy resin, and naphthol novolac-type epoxy resin, dicyclopentadiene-type epoxy resin, salicylaldehyde-type epoxy resin such as salicylaldehyde novolac-type epoxy resin, copolymer-type epoxy resin of naphthols and phenols, epoxidation products of aralkyl-type phenol resin, bisphenol-type epoxy resin, glycidyl ether-type epoxy resin of alcohols, glycidyl ether-type epoxy resin of paraxylylene- and/or metaxylylene-modified phenol resin, glycidyl ether-type epoxy resin of terpene-modified phenol resin, cyclopentadiene-type epoxy resin, glycidyl ether-type epoxy resin of polycyclic aromatic ring-modified phenol resin, glycidyl ether-type epoxy resin of naphthalene ring-containing phenol resin, glycidyl ester-type epoxy resin, glycidyl-type or methyl glycidyl-type epoxy resin, alicyclic epoxy resin, halogenated phenol novolac-type epoxy resin, hydroquinone-type epoxy resin, trimethylolpropane-type epoxy resin, linear aliphatic epoxy resin obtained by oxidizing an olefin bond with a peracid such as peracetic acid, epoxy resins having a structure represented by the formula (A1) given below, and epoxy resins having a structure represented by the formula (A2) given below. One of these epoxy resins may be used singly, or two or more thereof may be used in combination.

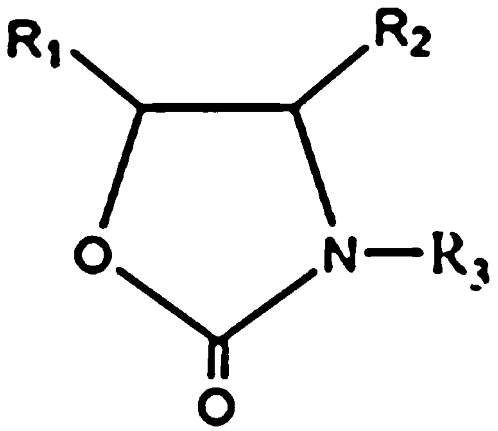

(A 1)

wherein $R_1$ to $R_3$ are each independently a hydrogen atom, an alkyl group, an aromatic group, a substituent containing a heteroatom, or a substituent containing a halogen atom, at least one of $R_1$ to $R_3$ contains a reactive group for the curing agent (D), and $R_1$ to $R_3$ are the same as or different from each other.

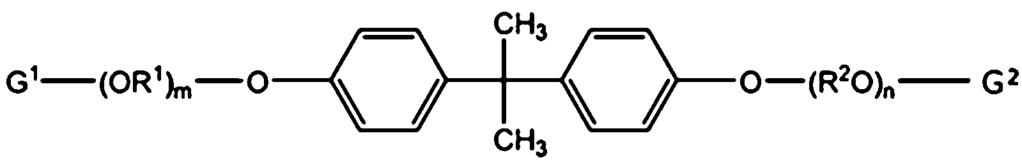

(A 2)

wherein each of $R^1$ and $R^2$ is an alkyl group having 1 to 12 carbon atoms, m and n are each independently an integer of 1 or larger, each of $G^1$ and $G^2$ is one member selected from the group consisting of a hydrogen atom, an alkyl group, an aromatic group, a substituent containing a heteroatom, and a substituent containing a halogen atom, and $G^1$ and $G^2$ are the same as or different from each other.

The epoxy resin preferably includes at least one member selected from the group consisting of biphenyl-type epoxy resin, orthocresol novolac-type epoxy resin, phenol novolac-type epoxy resin, salicylaldehyde novolac-type epoxy resin, naphthol novolac-type epoxy resin, an epoxy resin having a structure represented by the following formula (A1), and an epoxy resin having a structure represented by the following formula (A2), from the viewpoint of enhancing the mechanical strength of a bonded magnet.

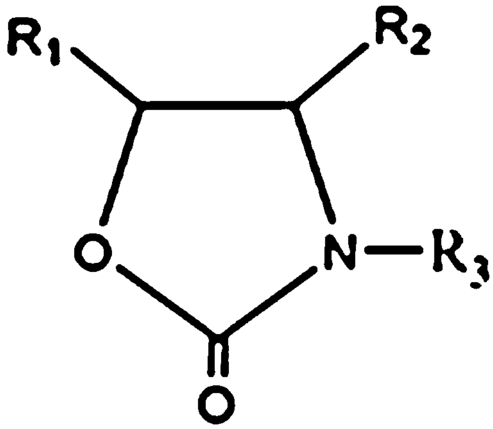

(A 1)

wherein $R_1$ to $R_3$ are each independently a hydrogen atom, an alkyl group, an aromatic group, a substituent containing a heteroatom, or a substituent containing a halogen atom, at least one of $R_1$ to $R_3$ contains a reactive group for the curing agent (D), and $R_1$ to $R_3$ are the same as or different from each other.

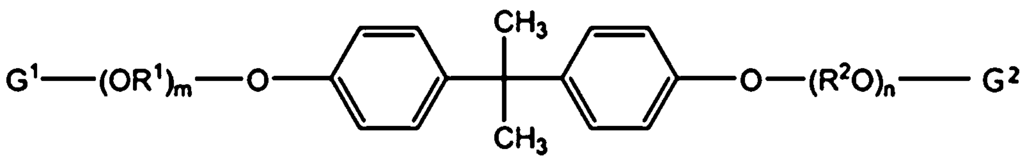

(A 2)

wherein each of $R^1$ and $R^2$ is an alkyl group having 1 to 12 carbon atoms, m and n are each independently an integer of 1 or larger, each of $G^1$ and $G^2$ is one member selected from the group consisting of a hydrogen atom, an alkyl group, an aromatic group, a substituent containing a heteroatom, and a substituent containing a halogen atom, and $G^1$ and $G^2$ are the same as or different from each other.

The epoxy resin further preferably includesan epoxy resin having a structure represented by the following formula (A1), or an epoxy resin having a structure represented by the following formula (A2), from the viewpoint of enhancing anchorage strength for a metal member.

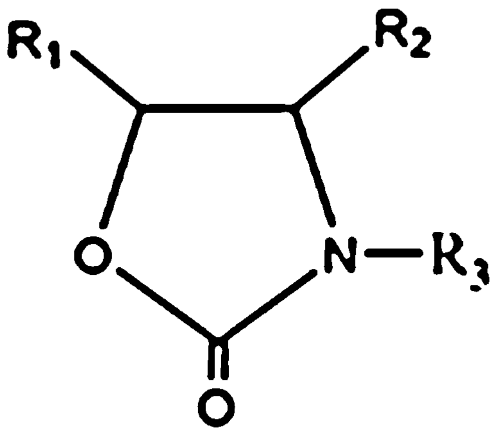

(A 1)

wherein $R_1$ to $R_3$ are each independently a hydrogen atom, an alkyl group, an aromatic group, a substituent containing a heteroatom, or a substituent containing a halogen atom, at least one of $R_1$ to $R_3$ contains a reactive group for the curing agent (D), and $R_1$ to $R_3$ are the same as or different from each other.

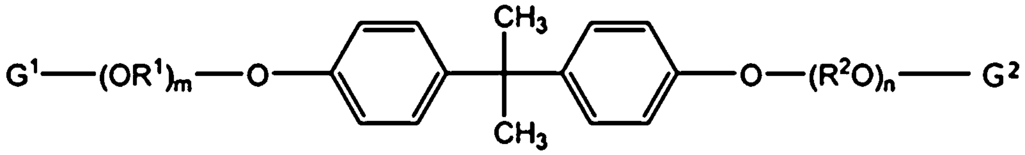

(A 2)

wherein each of $R^1$ and $R^2$ is an alkyl group having 1 to 12 carbon atoms, m and n are each independently an integer of 1 or larger, each of $G^1$ and $G^2$ is one member selected from the group consisting of a hydrogen atom, an alkyl group, an aromatic group, a substituent containing a heteroatom, and a substituent containing a halogen atom, and $G^1$ and $G^2$ are the same as or different from each other.

The epoxy resin preferably includesat least one epoxy resin having crystallinity, from the viewpoint of enhancing the fluidity of the compound. The epoxy resin having crystallinity has a melting point and can exert excellent fluidity because of being not softened in a temperature range of lower than the melting point.

Examples of the epoxy resin having crystallinity include hydroquinone-type epoxy resin, bisphenol-type epoxy resin, thioether-type epoxy resin, and biphenyl-type epoxy resin.

Examples of a commercially available product of the epoxy resin having crystallinity include EPICLON 860, EPICLON 1050, EPICLON 1055, EPICLON 2050, EPICLON 3050, EPICLON 4050, EPICLON 7050, EPICLON HM-091, EPICLON HM-101, EPICLON N-730A, EPICLON N-740, EPICLON N-770, EPICLON N-775, EPICLON N-865, EPICLON HP-4032D, EPICLON HP-7200L, EPICLON HP-7200, EPICLON HP-7200H, EPICLON HP-7200HH, EPICLON HP-7200HHH, EPICLON HP-4700, EPICLON HP-4710, EPICLON HP-4770, EPICLON HP-5000, EPICLON HP-6000, and N500P-2 (all are trade names of products manufactured by DIC Corp.), NC-3000, NC-3000-L, NC-3000-H, NC-3100, CER-3000-L, NC-2000-L, XD-1000, NC-7000-L, NC-7300-L, EPPN-501H, EPPN-501HY, EPPN-502H, EOCN-1020, EOCN-102S, EOCN-103S, EOCN-104S, CER-1020, EPPN-201, BREN-S, BREN-10S (all are trade names of products manufactured by Nippon Kayaku Co., Ltd.), and YX-4000, YX-4000H, YL4121H, and YX-8800 (all are trade names of products manufactured by Mitsubishi Chemical Corp.).

The epoxy resin (A) according to embodiment A preferably includes an epoxy resin that is in a solid state at room temperature.

The content of the epoxy resin that is in a solid state at room temperature is preferably 50% by mass or more, more preferably 75% by mass or more, further preferably 95% by mass or more, based on the total amount of the epoxy resin.

The content of the epoxy resin that is in a solid state at room temperature is preferably 100% by mass or less, more preferably 99% by mass or less, based on the total amount of the epoxy resin.

The epoxy resin satisfies the configuration described above, whereby the value of (X) - (Y) is easily controlled to an arbitrary range, and anchorage strength at the time of curing at a low temperature can be enhanced while the blocking of the compound can also be suppressed.

The content of the epoxy resin is preferably 1% by volume or more and 35% by volume or less, more preferably 3% by volume or more and 30% by volume or less, further preferably 5% by volume or more and 25% by volume or less, based on the total volume of the compound. The content of the epoxy resin satisfies the range described above, whereby both of the magnetic characteristics and mechanical strength of a bonded magnet can be achieved.

The content of the epoxy resin is preferably 0.5% by mass or more and 20% by mass or less, more preferably 1% by mass or more and 15% by mass or less, further preferably 2% by mass or more and 10% by mass or less, based on the total mass of the compound. The content of the epoxy resin satisfies the range described above, whereby both of the magnetic characteristics and mechanical strength of a bonded magnet can be achieved.

<Curing agent (B)>

The compound of embodiment A preferably includes a curing agent (B) different from the curing agent (D).

Examples of the curing agent include, but are not limited to, aliphatic polyamine, polyaminoamide, polymercaptan, aromatic polyamine, acid anhydrides, phenol resins, and dicyandiamide (DICY).

Aromatic polyamine, an acid anhydride, a phenol resin, or dicyandiamide (DICY) is preferably used as the curing agent, from the viewpoint of enhancing the heat resistance of a bonded magnet. Among them, a phenol resin is more preferably used.

Examples of the phenol resin include aralkyl-type phenol resin, dicyclopentadiene-type phenol resin, salicylaldehyde-type phenol resin, novolac-type phenol resin, copolymer-type phenol resin of benzaldehyde-type phenol and aralkyl-type phenol, paraxylylene- and/or metaxylylene-modified phenol resin, melamine-modified phenol resin, terpene-modified phenol resin, dicyclopentadiene-type naphthol resin, cyclopentadiene-modified phenol resin, polycyclic aromatic ring-modified phenol resin, biphenyl-type phenol resin, and triphenylmethane-type phenol resin. The phenol resin may be a copolymer constituted by two or more of those described above.

The phenol resin is preferably novolac-type phenol resin from the viewpoint of enhancing the heat resistance of a bonded magnet.

Examples of the novolac-type phenol resin include resins obtained by condensing or co-condensing phenols and/or naphthols and aldehydes in the presence of an acidic catalyst. Examples of the phenol constituting the novolac-type phenol resin include phenol, cresol, xylenol, resorcinol, catechol, bisphenol A, bisphenol F, phenylphenol, and aminophenol. Examples of the naphthol constituting the novolac-type phenol resin include α-naphthol, β-naphthol, and dihydroxynaphthalene. Examples of the aldehyde constituting the novolac-type phenol resin include formaldehyde, acetaldehyde, propionaldehyde, benzaldehyde, and salicylaldehyde.

For example, a compound having two phenolic hydroxy group in one molecule can be used as the curing agent. Examples of the compound having two phenolic hydroxy group in one molecule include resorcinol, catechol, bisphenol A, bisphenol F, and substituted or unsubstituted biphenol.

One of the curing agents described above may be used singly, or two or more thereof may be used in combination.

The ratio of an active group (phenolic OH group) in the curing agent reactive with an epoxy group in the epoxy resin is preferably 0.5 to 1.5 equivalents, more preferably 0.7 to 1.4 equivalents, further preferably 0.8 to 1.3 equivalents, per equivalent of the epoxy group in the epoxy resin.

The ratio of the active group in the curing agent satisfies the range described above, whereby the mechanical characteristics and heat resistance of a bonded magnet can be enhanced.

The curing agent (B) according to embodiment A preferably includesa curing agent that is in a solid state at room temperature.

The content of the curing agent that is in a solid state at room temperature is preferably 50% by mass or more, more preferably 75% by mass or more, further preferably 95% by mass or more, based on the total amount of the curing agent (B). The curing agent (B) satisfies the configuration described above, whereby the value of (X) - (Y) is easily controlled to an arbitrary range, and anchorage strength at the time of curing at a low temperature can be enhanced while the blocking of the compound can also be suppressed.

The content of the curing agent (B) is preferably 1% by volume or more and 35% by volume or less, more preferably 3% by volume or more and 30% by volume or less, further preferably 5% by volume or more and 25% by volume or less, based on the total volume of the compound. The content of the curing agent (B) satisfies the range described above, whereby the mechanical strength of a bonded magnet can be enhanced.

The content of the curing agent (B) is preferably 0.5% by mass or more and 20% by mass or less, more preferably 1% by mass or more and 15% by mass or less, further preferably 2% by mass or more and 10% by mass or less, based on the total mass of the compound. The content of the curing agent (B) satisfies the range described above, whereby the mechanical strength of a bonded magnet both can be achieved.

<Magnetic particle (C)>

The compound of embodiment A includes a magnetic particle.

One type of magnetic particle may be used singly, or two or more types thereof may be used in combination. In the case of mixing two or more types of magnetic particles, two or more types of magnetic particles differing in alloy composition, particle size (particle size distribution), shape, characteristics (isotropy or anisotropy), surface treatment, or the like can be used as a mixture.

The alloy composition of the magnetic particle is not limited as long as the curing characteristics of the resin composition are not reduced.

For example, a samarium-cobalt (Sm-Co)-based alloy particle (rare earth magnetic particle), a neodymium-iron-boron (Nd-Fe-B)-based alloy particle (rare earth magnetic particle), a samarium-iron-nitrogen (Sm-Fe-N)-based alloy particle (rare earth magnetic particle), an iron-cobalt (Fe-Co)-based alloy particle, an Al-Ni-Co-based alloy particle, or a ferrite magnet particle can be used as the magnetic particle.

The magnetic particle of embodiment A is preferably a rare earth magnetic particle.

The rare earth magnetic particle, compared with other magnetic particles, is excellent in coercivity and magnetic flux density and can enhance, for example, the magnetism of a bonded magnet.

The shape of the magnetic particle is not particularly limited, and spherical, flat-shaped, prism-shaped, and needle-like magnetic particles and the like can be used each singly or in combination. The shape of the magnetic particle can be evaluated from a circularity coefficient measured by the image processing of a microscopic observation image. The circularity coefficient is a value defined according to an expression given below, and a higher numeric value means that the particle gets rounder and closer to a spheric shape. It is preferred to include at least one or more types of magnetic particles

having a circularity coefficient of 0.70 or more, from the viewpoint of facilitating rotating the magnetic particle during molding in a magnetic field and being able to improve orientation.

As for the particle size (particle size distribution) of the magnetic particle, coarse magnetic particles (hereinafter, simply referred to as "rough particles") and fine magnetic particles (hereinafter, simply referred to as "fine particles") can be used each singly or in combination.

The average particle size (D50) of the coarse particles is preferably 30 μm or larger and 300 μm or smaller, more preferably 40 μm or larger and 250 μm or smaller. Since the coarse particles have high magnetic characteristics, the magnetic characteristics of a bonded magnet can be adjusted depending on the amount of the coarse particles added.

The average particle size (D50) of the fine particles is preferably 0.5 μm or larger and 30 μm or smaller, more preferably 1 μm or larger and 20 μm or smaller. The fine particles can enhance the amount of the filling magnetic particle and achieves improvement in magnetic characteristics.

The average particle size and particle size distribution of the magnetic particle are measured with a laser diffraction particle size distribution measurement apparatus (HELOS manufactured by Japan Laser Corp.).

The characteristics of the magnetic particle are not particularly limited, and anisotropic magnetic particles and isotropic magnetic particles can be used each singly or in combination. Magnetic characteristics can be improved by preparing the compound using anisotropic magnetic particles, and orienting the magnetic particles in a bonded magnet molded product by molding in a magnetic field.

The magnetic particle is preferably rust-proofed. Examples of the rust-proofing treatment include phosphoric acid treatment that forms a phosphoric acid compound layer, metal alkoxide oligomer treatment that forms an organometallic compound layer, coupling treatment that forms a coupling agent layer, and slow oxidation treatment that forms an oxide film. The rust-proofing treatment may be performed by a single treatment or by a combination of a plurality of treatments.

The content of the magnetic particle is preferably 40% by volume or more and 95% by volume or less, more preferably 45% by volume or more and 90% by volume or less, further preferably 50% by volume or more and 85% by volume or less, based on the total volume of the compound. The content of the magnetic particle satisfies the range described above, whereby the value of (X) - (Y) in the expression (2) is easily controlled.

<Curing agent (D)>

The compound of embodiment A includes a curing agent (D).

The curing agent (D) is preferably, for example, but not limited to, a latent curing agent from the viewpoint of achieving both of storage stability and anchorage strength at the time of curing at a low temperature.

Examples of the latent curing agent include, but are not limited to, imidazole compounds, amine-based adduct compounds such as amine-epoxy adducts and amine-urea adducts, and encapsulated curing agents obtained by coating these curing agents, and curing agents obtained by adsorbing these curing agents onto porous materials. The curing agent (D) preferably includes an amine-epoxy adduct and more preferably includes an adduct of an imidazole compound and bisphenol A-type epoxy resin, from the viewpoint of the balance between storage stability and reactivity.

The curing agent (D) may be at least one member selected from the group consisting of an imidazole compound and an amine-based adduct compound.

In the compound of embodiment A, the curing agent (D) preferably includesan encapsulated curing agent from the viewpoint of achieving both of storage stability and anchorage strength at the time of curing at a low temperature.

The encapsulated curing agent prevents a curing agent component from being diffused to the epoxy resin and the curing agent during storage or preservation of the compound by the shielding effect of a capsule membrane, and thus exhibits high stability. On the other hand, in a pressure molding step of the compound, the capsule membrane is broken by the pressurization of the compound so that the curing agent component is diffused to the epoxy resin. This can enhance anchorage strength at the time of curing at a low temperature. A plurality of magnetic powder particles compress microcapsules to break capsule membranes, whereby the advantageous effects of the present invention can be exerted.

The encapsulated curing agent preferably has a structure where the surface of a core containing the curing agent is coated with a shell containing a synthetic resin and/or an inorganic oxide. Among them, the shell constituting the encapsulated curing agent preferably contains a synthetic resin from the viewpoint of the stability of a membrane constituting the shell and the ease of breaking at the time of heating and pressurization.

The core is preferably, but not limited to, a solid at room temperature from the viewpoint of storage stability. For example, a solid imidazole compound or amine-based adduct compound (e.g., amine-epoxy adducts and amine-urea adducts) can be used. Among them, it is preferred to include an amine-epoxy adduct, and it is more preferred to include an adduct of an imidazole compound and bisphenol A-type epoxy resin, from the viewpoint of the balance between storage stability and reactivity.

Examples of the synthetic resin contained in the shell include, but are not limited to, epoxy-based resins, phenol-based resins, polyester-based resins, polyethylene-based resins, nylon-based resins, polystyrene-based resins, and

urethane-based resins. Among them, the synthetic resin is preferably an epoxy-based resin, a phenol-based resin, or a urethane-based resin from the viewpoint of the balance between the stability of a membrane constituting the shell and breakability at the time of heating and pressurization.

Examples of the epoxy-based resin for use in the shell include, but are not limited to, epoxy resins having two or more epoxy groups, resins produced through the reaction of an epoxy resin having two or more epoxy groups with a compound having two or more active hydrogen moieties, and reaction products of a compound having two or more epoxy groups and a compound having one active hydrogen moiety and a carbon-carbon double bond. Among them, a reaction product of a compound having two or more epoxy groups and a compound having two or more active hydrogen moieties is preferred, and, particularly, a reaction product of an amine-based curing agent and an epoxy resin having two or more epoxy groups is more preferred, from the viewpoint of stability.

Examples of the phenol-based resin include, but are not limited to, phenol-formaldehyde polycondensates, cresol-formaldehyde polycondensates, resorcinol-formaldehyde polycondensates, bisphenol A-formaldehyde polycondensates, and polyethylene polyamine modification products of phenol-formaldehyde polycondensates.

Examples of the polyester-based resin include, but are not limited to, ethylene glycol-terephthalic acid-polypropylene glycol polycondensates, ethylene glycol-butylene glycol-terephthalic acid polycondensates, and terephthalic acid-ethylene glycol-polyethylene glycol polycondensates.

Examples of the polyethylene-based resin include, but are not limited to, ethylene-propylene-vinyl alcohol copolymers, ethylene-vinyl acetate copolymers, and ethylene-vinyl acetate-acrylic acid copolymers.

Examples of the nylon-based resin include, but are not limited to, adipic acid-hexamethylenediamine polycondensates, sebacic acid-hexamethylenediamine polycondensates, and p-phenylenediamine-terephthalic acid polycondensates.

Examples of the polystyrene-based resin include, but are not limited to, styrene-butadiene copolymers, styrene-butadiene-acrylonitrile copolymers, acrylonitrile-styrene-divinylbenzene copolymers, and styrene-propenyl alcohol copolymers.

Examples of the urethane-based resin include, but are not limited to, isocyanate monomers such as butyl isocyanate, cyclohexyl isocyanate, octadecyl isocyanate, phenyl isocyanate, tolylene diisocyanate, diphenylmethane diisocyanate, xylylene diisocyanate, hexamethylene diisocyanate, isophorone diisocyanate, tolidine diisocyanate, naphthalene diisocyanate, and triphenylmethane triisocyanate, and condensates thereof, and polycondensates of polymers thereof and monoalcohols or polyhydric alcohols. Among them, a urethane resin is preferred which is an addition polymer obtained by adding monoisocyanate or polyvalent isocyanate to a monoalcohol or a polyhydric alcohol.

Examples of the inorganic oxide include, but are not limited to, boron compounds such as boron oxide and boric acid ester, silicon dioxide, and calcium oxide. Among them, boron oxide is preferred from the viewpoint of the stability of a membrane constituting the shell and the ease of breaking at the time of heating.

The shell preferably includes a reaction product of at least one member selected from the group consisting of an isocyanate compound, an active hydrogen compound, a curing agent for an epoxy resin, an epoxy resin, and an amine compound from the viewpoint of the balance between the preservation stability and curability of the compound of embodiment A.

Examples of the isocyanate compound include, but are not limited to, aliphatic diisocyanate, alicyclic diisocyanate, aromatic diisocyanate, aliphatic triisocyanate, and polyisocyanate.

Examples of the aliphatic diisocyanate include, but are not limited to, ethylene diisocyanate, propylene diisocyanate, butylene diisocyanate, hexamethylene diisocyanate, and trimethylhexamethylene diisocyanate.

Examples of the alicyclic diisocyanate include, but are not limited to, isophorone diisocyanate, 4,4'-dicyclohexylmethane diisocyanate, norbornane diisocyanate, 1,4-isocyanatocyclohexane, 1,3-bis(isocyanatomethyl)-cyclohexane, and 1,3-bis(2-isocyanatopropyl-2-yl)-cyclohexane.

Examples of the aromatic diisocyanate include, but are not limited to, tolylene diisocyanate, 4,4'-diphenylmethane diisocyanate, xylene diisocyanate, and 1,5-naphthalene diisocyanate.

Examples of the aliphatic triisocyanate include, but are not limited to, 1,6,11-undecane triisocyanate, 1,8-diisocyanato-4- isocyanatomethyloctane, and 1,3,6-triisocyanatomethylhexane.

Examples of the polyisocyanate include, but are not limited to, polymethylene polyphenyl polyisocyanate and polyisocyanate derived from diisocyanate compounds. Examples of the polyisocyanate derived from diisocyanate compounds include isocyanurate-type polyisocyanate, biuret-type polyisocyanate, urethane-type polyisocyanate, allophanate-type polyisocyanate, and carbodiimide-type polyisocyanate.

Examples of the active hydrogen compound include, but are not limited to, water, compounds having at least one primary amino group and/or secondary amino group, and compounds having at least one hydroxy group. One of these active hydrogen compounds may be used singly, or two or more thereof may be used in combination.

Examples of the compound having at least one primary amino group and/or secondary amino group include, but are not limited to, aliphatic amine, alicyclic amine, and aromatic amine.

Examples of the aliphatic amine include, but are not limited to: alkylamine such as methylamine, ethylamine,

propylamine, butylamine, and dibutylamine; alkylenediamine such as ethylenediamine, propylenediamine, butylenediamine, and hexamethylenediamine; polyalkylene polyamine such as diethylenetriamine, triethylenetetramine, and tetraethylenepentamine; and polyoxyalkylene polyamine such as polyoxypropylenediamine and polyoxyethylenediamine.

Examples of the alicyclic amine include, but are not limited to, cyclopropylamine, cyclobutylamine, cyclopentylamine, cyclohexylamine, and isophoronediamine.

Examples of the aromatic amine include, but are not limited to, aniline, toluidine, benzylamine, naphthylamine, diaminodiphenylmethane, and diaminodiphenylsulfone.

Examples of the compound having at least one hydroxy group include alcohol compounds and phenol compounds.

Examples of the alcohol compound include, but are not limited to: monoalcohols such as methyl alcohol, propyl alcohol, butyl alcohol, amyl alcohol, hexyl alcohol, heptyl alcohol, octyl alcohol, nonyl alcohol, decyl alcohol, undecyl alcohol, lauryl alcohol, dodecyl alcohol, stearyl alcohol, eicosyl alcohol, allyl alcohol, crotyl alcohol, propargyl alcohol, cyclopentanol, cyclohexanol, benzyl alcohol, cinnamyl alcohol, ethylene glycol monomethyl ether, ethylene glycol monoethyl ether, and diethylene glycol monobutyl; polyhydric alcohols such as ethylene glycol, polyethylene glycol, propylene glycol, polypropylene glycol, 1,3-butanediol, 1,4-butanediol, hydrogenated bisphenol A, neopentyl glycol, glycerin, trimethylolpropane, and pentaerythritol; and polyhydric alcohols such as compounds having two or more secondary hydroxy groups in one molecule, obtained through the reaction of a compound having at least one epoxy group with a compound having at least one hydroxy group, carboxyl group, primary amino group, secondary amino group, or thiol group.

These alcohol compounds may be any of primary alcohols, secondary alcohols, and tertiary alcohols.

Examples of the phenol compound include, but are not limited to, monophenols such as carbolic acid, cresol, xylenol, carvacrol, motyl, and naphthol, and polyhydric phenols such as catechol, resorcinol, hydroquinone, bisphenol A, bisphenol F, pyrogallol, phloroglucine, 2-(dimethylaminomethyl)phenol, and 2,4,6-tris(dimethylaminomethyl)phenol.

These compounds having at least one hydroxy group are preferably polyhydric alcohols and polyhydric phenols, more preferably polyhydric alcohols, from the viewpoint of latency and solvent resistance.

Reaction conditions for preparing the reaction product of at least one member selected from the group consisting of an isocyanate compound, an active hydrogen compound, a curing agent for an epoxy resin, an epoxy resin, and an amine compound, contained in the shell constituting the encapsulated curing agent, as mentioned above, are not particularly limited and usually involve, for example, a temperature range of -10°C to 150°C and a reaction time of 10 minutes to 100 hours.

In the case of using an isocyanate compound and an active hydrogen compound for preparing the reaction product contained in the shell, the blending ratio is preferably in the range of 1:0.1 to 1:1000 in terms of (isocyanate group in the isocyanate compound):(active hydrogen in the active hydrogen compound) (equivalent ratio).

Examples of the imidazole-based compound include, but are not limited to, imidazoles such as imidazole, 2-methylimidazole, 2-ethyl-4-methylimidazole, 2-undecylimidazole, 2-heptadecylimidazole, 2-phenylimidazole, 1-aminoethyl-2-methylimidazole, 1-(2-hydroxy-3-phenoxypropyl)-2-methylimidazole, 1-(2-hydroxy-3-phenoxypropyl)-2-ethyl-4-methylimidazole, 1-(2-hydroxy-3-butoxypropyl)-2-methylimidazole, and 1-(2-hydroxy-3-butoxypropyl)-2-ethyl-4-methylimidazole, and compounds obtained through the reaction of these imidazoles with at least one member selected from the group consisting of a carboxylic acid compound, a sulfonic acid compound, a urea compound, an isocyanate compound, and an epoxy resin.

Examples of the amine-based adduct compound include compounds obtained through the reaction of at least one member selected from the group consisting of a carboxylic acid compound, a sulfonic acid compound, a urea compound, an isocyanate compound, and an epoxy resin with amine-based curing agents.

One of the curing agents mentioned above may be used singly, or two or more thereof may be used in combination.

The content of the curing agent (D) in the compound of embodiment A is preferably 0.1 parts by mass or more, more preferably 0.3 parts by mass or more, further preferably 0.5 parts by mass or more, per 100 parts by mass of the epoxy resin (A). The content of the curing agent (D) satisfies the range described above, whereby anchorage strength at the time of curing at a low temperature is easily controlled to a proper range.

The content of the curing agent (D) is preferably 15.0 parts by mass or less, more preferably 12.0 parts by mass or less, further preferably 10.0 parts by mass or less, per 100 parts by mass of the epoxy resin (A). The content of the curing agent (D) satisfies the range described above, whereby the storage stability of the compound of embodiment A is easily controlled to a proper range.

<Lubricant>

The compound of embodiment A may include a lubricant. The lubricant contained in the compound improves the fluidity and moldability of the compound and improves the mold release properties of the compound. As a result, the

accuracy of the shape and dimension of a bonded magnet is improved, and structural defects of a bonded magnet are easily suppressed.

The lubricant can be at least one member selected from the group consisting of a saturated fatty acid, a saturated fatty acid salt, and saturated fatty acid ester. A wax can be at least one member selected from the group consisting of, for example, lauric acid, myristic acid, pentadecylic acid, palmitic acid, margaric acid, stearic acid, arachidic acid, henicosylic acid, behenic acid, lignoceric acid, cerotic acid, montanic acid, melissic acid, calcium laurate, calcium myristate, calcium pentadecylate, calcium palmitate, calcium margarate, calcium stearate, calcium arachidate, calcium henicosylate, calcium behenate, calcium lignocerate, calcium cerotate, calcium montanate, calcium melissate, barium laurate, barium myristate, barium pentadecylate, barium palmitate, barium margarate, barium stearate, barium arachidate, barium henicosylate, barium behenate, barium lignocerate, barium cerotate, barium montanate, barium melissate, lauric acid ester, myristic acid ester, pentadecylic acid ester, palmitic acid ester, margaric acid ester, stearic acid ester, arachidic acid ester, henicosylic acid ester, behenic acid ester, lignoceric acid ester, cerotic acid ester, montanic acid ester, and melissic acid ester. The compound may includea wax other than those described above. The wax can be at least one member selected from the group consisting of, for example, a magnesium salt of the saturated fatty acid, an aluminum salt of the saturated fatty acid, 12-oxystearic acid, calcium ricinoleate, stearamide, oleamide, erucamide, behenamide, palmitamide, lauramide, hydroxystearamide, methylene bisstearamide, ethylene bisstearamide, ethylene bislauramide, distearyl adipamide, ethylene bisoleamide, dioleyl adipamide, N-stearyl stearamide, N-oleyl stearamide, N-stearyl erucamide, methylol stearamide, methylol behenamide, ethylene glycol, stearyl alcohol, polyethylene glycol, polypropylene glycol, polytetramethylene glycol, silicone oil, silicon grease, fluorine-based oil, fluorine-based grease, a fluorine-containing resin powder, paraffin wax, polyethylene wax, amide wax, polypropylene wax, ester wax, carnauba wax, and microwax. The compound can include one of the lubricants described above. The compound may include two or more of the lubricants described above.

The inner wall surface (wall surface that comes into contact with a punch) of a mold die may be coated with a dispersion of an internal lubricant, instead of or in addition to the lubricant blended into the compound.

<Coupling agent>

The compound of embodiment A may include a coupling agent. The coupling agent contained therein can further enhance tight contact between the resin composition and magnetic particle surface and can further enhance the strength of a bonded magnet.

Examples of the coupling agent include coupling agents of silane-based compounds such as epoxysilane, mercaptosilane, aminosilane, alkylsilane, ureidosilane, and vinylsilane, coupling agents of titanium-based compounds, coupling agents of aluminum chelates, and coupling agents of aluminum/zirconium-based compounds.

<Flow aid>

The compound of the present invention may includean inorganic filler as a flow aid. The inorganic filler may be constituted by one type of particle. The inorganic filler may be a combination of two or more types of particles.

The average particle size (D50) of the inorganic filler is preferably 1 μm or smaller, more preferably 500 nm or smaller, further preferably 100 nm or smaller. This can enhance the filling factor of a bonded magnet.

Examples of the inorganic filler include inorganic fine particles such as silica, alumina, calcium carbonate, kaolin clay, titanium oxide, barium sulfate, zinc oxide, aluminum hydroxide, magnesium hydroxide, talc, and mica.

<flame retardant>

The compound of embodiment A may include a flame retardant. The flame retardant contained therein can improve the fire resistance of the compound. The flame retardant is preferably at least one member selected from the group consisting of a bromine-based flame retardant, a phosphorus-based flame retardant, a hydrated metal compound-based flame retardant, a silicone-based flame retardant, a nitrogen-containing compound, a hindered amine compound, an organometallic compound, and an aromatic engineering plastic from the viewpoint of environmental safety, recyclability, molding processability, and low cost.

<Organic solvent (E)>

**In** a production process of the compound, a varnish of the resin composition dissolved in an organic solvent is prepared, and individual magnetic particles constituting the magnetic particle can be surface-coated therewith to obtain a homogenous compound. The organic solvent is not limited as long as the solvent can dissolve the resin composition. The organic solvent can be at least one solvent selected from the group consisting of, for example, acetone, methyl ethyl

ketone, methyl isobutyl ketone, benzene, toluene, and xylene. The organic solvent is preferably a liquid at ordinary temperature in consideration of workability, and the boiling point of the organic solvent is preferably 60°C or higher and 150°C or lower. Such a solvent is preferably, for example, acetone or methyl ethyl ketone.

<<Embodiment B>>

The compound of embodiment B (hereinafter, simply referred to as a "compound") is a compound including an epoxy resin (A), a magnetic particle (C), and a curing agent (D), wherein the curing agent (D) is an encapsulated curing agent.
The compound of embodiment B preferably includesa curing agent (B) different from the curing agent (D).
The core component of the curing agent (D) is a solid and preferably includesan amine-epoxy adduct.
The details, such as specific examples, preferred specific examples, preferred contents, and preferred forms, of the epoxy resin (A), the curing agent (B), the magnetic particle (C), and the curing agent (D) are the same as the details, such as specific examples, preferred specific examples, preferred contents, and preferred forms, of the epoxy resin (A), the curing agent (B), the magnetic particle (C), and the curing agent (D) in embodiment A mentioned above.
The details, such as specific examples, preferred specific examples, preferred contents, and preferred forms, of the curing agent (D) are the same as the details, such as specific examples, preferred specific examples, preferred contents, and preferred forms, of the curing agent (D) in embodiment A mentioned above.

<Varnish>

The varnish of the present embodiment is a varnish includingan epoxy resin (A), a curing agent (B), a curing agent (D), and an organic solvent (E), wherein the curing agent (D) includes an encapsulated curing agent, and a core component of the curing agent (D) is a solid and includes an amine-epoxy adduct. The varnish of the present embodiment may be for bonded magnets and can be used in a process of producing a compound for a bonded magnet mentioned later.

<Method for producing compound>

Examples of the method for producing the compound of the present embodiment include, but are not particularly limited to, a method of mixing a resin composition at a temperature equal to or higher than a melting point (hereinafter, simply referred to as "melt mixing"), and a method of dissolving a resin composition in a solvent and mixing the solution (hereinafter, simply referred to as "dissolution and mixing").
The melt mixing can be carried out by the following method.
Compound starting materials (epoxy resin, curing agents, magnetic particle, and other additives) are thoroughly mixed with a mixer to obtain a mixed powder of the compound starting materials. The obtained mixed powder of the compound starting materials is heated and mixed at a temperature equal to or higher than the softening temperature of the resin composition, and solid matter is appropriately ground to obtain a compound.
The temperature of heating and mixing is preferably 40°C or higher and 140°C or lower, more preferably 60°C or higher and 120°C or lower, depending on the type of the resin composition or the amount of the resin composition blended. Heating and mixing within the temperature range described above can enhance material dispersibility in the compound while suppressing the curing reaction of the resin composition.
A mixing apparatus is not particularly limited, and a heating kneader, for example, can be used. In this respect, material dispersibility can be controlled by changing the amounts of the compound starting materials added.
The dissolution and mixing can be carried out by the following method.
Starting materials, such as an epoxy resin and curing agents, for a resin composition are dissolved in an organic solvent to obtain a solution (varnish) of a resin composition. Magnetic particles are added to the solution of the resin composition so that the magnetic particles are dispersed in the solution of the resin composition. Then, the organic solvent is removed from the solution containing the magnetic particles and the resin composition by distillation under reduced pressure and drying. As a result, the surface of the magnetic particles is coated with the resin composition to obtain a compound composed of the magnetic particles and the resin composition.
In the step of removing the organic solvent from the solution containing the magnetic particles and the resin composition, the organic solvent is preferably distilled off under reduced pressure at ordinary temperature using an evaporator while the solution is stirred. Solid matter obtained by distillation under reduced pressure is further dried in a vacuum dryer or the like. Then, the solid matter is appropriately ground to obtain a compound. The organic solvent can be distilled off at ordinary temperature, instead of being distilled off under reduced pressure, while the solution is stirred with a kneader or the like. In a method for drying the solid matter obtained by distillation, the solid matter may be dried by the heating of the solid matter at, for example, 80°C or lower, preferably 60°C or lower, more preferably 40°C or lower.

<Method for producing bonded magnet>

The bonded magnet of the present embodiment is a bonded magnet obtained by molding and curing the compound.

The compound filled into a mold is compression-molded to obtain a molded product. A higher molding pressure improves the density of the bonded magnet, whereas easily cracking magnetic particles. The molding pressure can be arbitrarily set depending on the characteristics of the compound or the characteristics of the bonded magnet.

A resin composition in a molded product is cured by the heat treatment of the molded product so that magnetic particles in the molded product are bonded to each other through a cured product of the resin composition to obtain a bonded magnet. The heat treatment temperature of the molded product is preferably set to a temperature at which the resin composition is sufficiently cured. Low-temperature curing and short-time curing are preferred from the viewpoint of suppressing the oxidation of magnetic particle surface. The curing temperature is, for example, preferably 200°C or lower, more preferably 180°C or lower, further preferably 150°C or lower. The curing time is, for example, preferably 120 minutes or shorter, more preferably 60 minutes or shorter, further preferably 30 minutes or shorter.

In the case of orienting magnetic particles, a magnetic field may be applied before compression molding, during compression molding, and during heat treatment of the molded product.

The bonded magnet of the present embodiment can be preferably used for motors. The motor of the present embodiment includes the bonded magnet of the present embodiment.

## Examples

Hereinafter, the present embodiment will be specifically described with reference to specific Examples and Comparative Examples. However, the present invention is not limited by Examples and Comparative Examples given below by any means.

In the following description, the terms "parts" and "%" are based on mass unless otherwise specified.

[Bonded magnet compound]

(Epoxy resins (A-1) to (A-7))

Epoxy resins (A-1) to (A-7) used in Examples and Comparative Examples are shown in Table 1.

[Table 1]

| Epoxy resin No. | Resin type | Presence or absence of structure represented by formula (A1) | Presence or absence of structure represented by formula (A2) | Nature | Epoxy equivalent (g/eq.) |
|---|---|---|---|---|---|
| A-1 | Biphenyl novolac type | Absent | Absent | Solid | 270 |
| A-2 | Tetramethyl biphenol type | Absent | Absent | Solid | 191 |
| A-3 | Bisphenol A type | Absent | Absent | Liquid | 186 |
| A-4 | Bisphenol F type | Absent | Absent | Liquid | 172 |
| A-5 | Bisphenol A type | Absent | Absent | Liquid | 193 |
| A-6 | AER4001 (manufactured by Asahi Kasei Corp.) | Present | Absent | Solid | 193 |
| A-7 | AER9000 (manufactured by Asahi Kasei Corp.) | Absent | Present | Liquid | 370 |

(Curing agents (B-1) to (B-3))

Epoxy resins (B-1) to (B-3) used in Examples and Comparative Examples are shown in Table 2.

[Table 2]

| Curing agent No. | Resin type | Nature | Hydroxy group equivalent (g/eq.) |
|---|---|---|---|
| B-1 | Biphenyl novolac | Solid | 199 |
| B-2 | 2-Allylphenol-formaldehyde polycondensate | Liquid | 141 |
| B-3 | Phenol novolac | Solid | 104 |

(Magnetic particles (C-1) and (C-2))

Magnetic particles (C-1) and (C-2) used in Examples and Comparative Examples are shown in Table 3.

[Table 3]

| Magnetic particle No. | Product name | Type | Particle size (D50) of rough particle | Particle size (D50) of fine particle |
|---|---|---|---|---|
| C-1 | MQP-B4 (manufactured by Magnequench International, LLC) | Nd-Fe-B-based | 100 μm | - |
| C-2 | Sm-Fe-N-based anisotropic magnet powder (manufactured by Sumitomo Metal Mining Co., Ltd.) | Sm-Fe-N-based | - | 3 μm |

(Curing agents (D-1) to (D-5))

Magnetic particles (D-1) to (D-5) used in Examples and Comparative Examples are shown in Table 4.

[Table 4]

| Curing accelerator No. | Product name |
|---|---|
| D-1 | Non-encapsulated latent accelerator (manufactured by Asahi Kasei Corp.) |
| D-2 | Microencapsulated latent accelerator dispersed in epoxy resin (manufactured by Asahi Kasei Corp.) |
| D-3 | Triphenylborane - Triphenylphosphine Complex (manufactured by Tokyo Chemical Industry Co., Ltd.) |
| D-4 | PX-4PB (manufactured by Nippon Chemical Industrial Co., Ltd.) |
| D-5 | 2-Ethyl-4-methylimidazole (manufactured by Tokyo Chemical Industry Co., Ltd.) |

<Production Example of curing agent (D-1)>

1 equivalent of the epoxy resin (A-3) and 1 equivalent (based on active hydrogen) of 2-methylimidazole were reacted at 80°C in a 1:1 mixed solvent of n-butanol and toluene. Then, an excess of amine was distilled off under reduced pressure, together with the solvent, to obtain blocked curing agent 1 that was in a solid state at 25°C.

The blocked curing agent 1 was roughly ground into approximately 0.1 to 2 mm with a grinding machine "Rotoplex" (manufactured by Hosokawa Micron Corp.), and the obtained roughly ground product was ground with an airflow jet mill (manufactured by Nisshin Engineering Inc., CJ25 model). Next, the ground product was classified with an air classifier "Turbo Classifier" (manufactured by Nisshin Engineering Inc.) to obtain a curing agent (D-1) that was a solid at 25°C.

<Production Example of curing agent (D-2)>

100 parts by mass of the epoxy resin (A-3), 100 parts by mass of the epoxy resin (A-4), 100 parts by mass of the curing agent (D-1), and 10 parts by mass of an encapsulant (manufactured by Nippon Polyurethane Industry Co., Ltd.; MR-200) were added, dispersed and mixed, and then reacted at 25°C to 55°C for 5 hours and at 60°C for 48 hours to obtain an encapsulated curing agent (D-2) dispersed in the epoxy resin.

[Preparation of bonded magnet compound]

(Example 1)

4.0 g of the epoxy resin (A-1), 3.17 g of the curing agent (B-1), 0.3 g of the curing agent (D-2), and 33.0 g of methyl ethyl ketone were mixed in a 300 mL recovery flask and further stirred for 30 minutes to prepare a solution of a resin composition (resin solution). The curing agent (D-2) used contained 0.1 g of the encapsulated curing agent, 0.1 g of the epoxy resin (A-3), and 0.1 g of the epoxy resin (A-4).
67.5 g of the magnetic particles (C-1) was added to the recovery flask containing the resin solution and stirred at 25°C for 30 minutes. Subsequently, the solvent in the flask was completely distilled off by reducing the internal pressure of an evaporator to 0.1 MPa or lower. In the process of distilling off the solvent, an operation of reducing the internal pressure of the flask, an operation of bringing the internal pressure of the flask back to ordinary pressure, and an operation of loosening aggregated contents in the flask were repeated several times in this order for thoroughly removing the solvent. After the solvent was distilled off, a mixture of the resin composition and the magnetic particles was recovered from the flask and spread over a plate. The mixture on the plate was dried at ordinary temperature for 8 hours in a vacuum dryer. After the mixture was dried, the aggregated mixture was roughly ground to obtain a bonded magnet compound (CPD-1).
The obtained bonded magnet compound was used in evaluation given below.

(Examples 2 to 17 and Comparative Examples 2 to 10)

Bonded magnet compounds (CPD-2) to (CPD-17) and (CPD-19) to (CPD-27) were obtained in the same manner as in Example 1 except that the formulation was changed to each formulation described in Table 5.
Evaluation was conducted in the same manner as in Example 1.

(Comparative Example 1)

4.10 g of the epoxy resin (A-3), 3.10 g of the curing agent (B-2), and 0.1 g of the curing agent (D-1) were placed in a plastic stirring container, which was then stirred and mixed in a rotation-revolution mixer ("ARE-310" manufactured by Thinky Corp.) to obtain a resin composition.
65.5 g of the magnetic particles (C-1) was added to the resin composition and stirred and mixed in a rotation-revolution mixer to obtain a bonded magnet compound (CPD-17).
Evaluation was conducted in the same manner as in Example 1.

[Evaluation]

(Exothermic peak temperatures (X) and (Y) in differential scanning calorimetry)

The bonded magnet compound obtained in each of Examples and Comparative Examples was measured from 25 to 250°C at 2°C/min using a DSC measurement apparatus Q2000 manufactured by TA Instruments Japan Inc. to obtain a calorimetric curve. In the obtained calorimetric curve, the exothermic peak temperature of an exothermic peak at which the maximum heat was released was defined as (X).
Likewise, the bonded magnet compound obtained in each of Examples and Comparative Examples was pressurized at 200 MPa for 5 minutes, and a calorimetric curve of the resulting sample was obtained. The exothermic peak temperature of an exothermic peak at which the maximum heat was released was defined as (Y). The pressurization of the bonded magnet compound was carried out using a mold for powder molding having a diameter of $\phi$10.0 mm (manufactured by Labonect K.K.), and the obtained pellets were loosened to obtain a measurement sample. The pellets had a thickness of 1.0 mm.

(Anchorage strength for steel plate)

The bonded magnet compound obtained in each of Examples and Comparative Examples was filled into a mold for powder molding having a diameter of $\phi$10.0 mm (manufactured by Labonect K.K.) and pressurized at 200 MPa for 1 minute to form pellets having a thickness of 1.0 mm.
The obtained pellets were sandwiched between two standard test plates (SPCC-SB, 1.6 mm $\times$ 25 mm $\times$ 100 mm, manufactured by Nippon Testpanel Co., Ltd.) and heat-pressed in a hydraulic molding machine TM-10 (manufactured by Toho Machinery Co., Ltd.) to prepare a test piece. Heating conditions of the hydraulic molding machine were 150°C for 30 minutes, and compression conditions were 200 MPa. The anchorage position of the pellets for the test piece is shown in Figure 1.

The obtained test piece was applied to an autograph tester (AGX-5kNX, manufactured by Shimadzu Corp.), and the maximum load at which the anchored surface of the test piece was broken to separate the test piece was measured at a load cell of 5 kN and at a rate of 5 mm/min. The maximum load for separation was divided by an adhesion area, and the resulting value was regarded as anchorage strength.
A, B, and C ranks were defined as accepted.

<Evaluation criteria>

A: The anchorage strength was 1200 N/$mm^2$ or more.
B: The anchorage strength was 1000 N/$mm^2$ or more and less than 1200 N/$mm^2$.
C: The anchorage strength was 800 N/$mm^2$ or more and less than 1000 N/$mm^2$.
D: The anchorage strength was 600 N/$mm^2$ or more and less than 800 N/$mm^2$.
E: The anchorage strength was less than 600 N/$mm^2$.

(Storage stability)

The bonded magnet compound (CPD-1) was left for 7 days in an environment of 40°C, and anchorage strength for a steel plate was measured using the bonded magnet compound (CPD-1) thus left. On the basis of anchorage strength for the steel plate before and after the compound was left, the rate of reduction in anchorage strength was calculated according to the following expression (3) and used as an index for storage stability.

Rate of reduction in anchorage strength = Anchorage strength of the compound left at 40°C for 7 days for the steel plate / Anchorage strength for the steel plate × 100 (3)

A, B, and C ranks were defined as accepted.

<Evaluation criteria>

A: The rate of reduction in anchorage strength for the steel plate was less than 10.0%.
B: The rate of reduction in anchorage strength for the steel plate was 10.0% or more and less than 15.0%.
C: The rate of reduction in anchorage strength for the steel plate was 15.0% or more and less than 20.0%.
D: The rate of reduction in anchorage strength for the steel plate was 20.0% or more and less than 25.0%.
E: The rate of reduction in anchorage strength for the steel plate was 25.0% or more.

(Blocking property)

The bonded magnet compound (CPD-1) was left for 7 days in an environment of 40°C, and change in particle size between before and after the compound was left was evaluated.
A and B ranks were defined as accepted.

<Evaluation criteria>

A: No change was seen in the particle size of the compound.
B: The coalescence of the compound was seen, but was loosened by the touch of fingers.
C: The coalescence of the compound was seen and was not loosened by the touch of fingers.
D: The blocked coalescence of the compound was observed.

Table 5 below shows the composition of the bonded magnet compounds (CPD-1 to CPD-17) of [Examples 1 to 17] and the bonded magnet compounds (CPD-18 to CPD-27) of [Comparative Example 1 to 10]. Table 6 below shows their evaluation results.

[Table 5]

| | Bonded magnet compound No. | Epoxy resin (1) | | Epoxy resin (2) | | Epoxy resin (3) | | Epoxy resin (4) | | Curing agent B (1) | | Curing agent B (2) | | Magnetic particle | | Curing agent D | | Solvent | | Proportion of magnetic particle | | Proportion of solid epoxy resin | Proportion of solid curing agent | Content of curing accelerator per 100 parts in total of epoxy resin |
|---|---|---|---|---|---|---|---|---|---|---|---|---|---|---|---|---|---|---|---|---|---|---|---|---|
| | | No. | Mass | No. | Mass | No. | Mass | No. | Mass | No. | Mass | No. | Mass | No. | Mass | No. | Mass | Type | Mass | % by mass | % by volume | % by mass | % by mass | parts |
| Example 1 | CPD-1 | A-1 | 4.00 | A-3 | 0.10 | A-4 | 0.10 | - | | B-1 | 3.17 | - | | C-1 | 67.5 | D-2 | 0.10 | Methyl ethyl ketone | 33.0 | 90.0 | 59.0 | 95.2 | 100 | 2.4 |
| Example 2 | CPD-2 | A-1 | 4.00 | A-3 | 0.10 | A-4 | 0.10 | - | | B-1 | 3.17 | - | | C-1 | 48.0 | D-2 | 0.10 | Methyl ethyl ketone | 33.0 | 86.5 | 50.5 | 95.2 | 100 | 2.4 |
| Example 3 | CPD-3 | A-1 | 4.00 | A-3 | 0.10 | A-4 | 0.10 | - | | B-1 | 3.17 | - | | C-1 | 39.0 | D-2 | 0.10 | Methyl ethyl ketone | 33.0 | 83.9 | 45.3 | 95.2 | 100 | 2.4 |
| Example 4 | CPD-4 | A-1 | 4.00 | A-3 | 0.10 | A-4 | 0.10 | - | | B-1 | 3.17 | - | | C-1 | 32.0 | D-2 | 0.10 | Methyl ethyl ketone | 33.0 | 81.1 | 40.5 | 95.2 | 100 | 2.4 |
| Example 5 | CPD-5 | A-1 | 4.00 | A-3 | 0.10 | A-4 | 0.10 | - | | B-1 | 3.17 | - | | C-1 | 30.0 | D-2 | 0.10 | Methyl ethyl ketone | 33.0 | 80.1 | 39.0 | 95.2 | 100 | 2.4 |
| Example 6 | CPD-6 | A-1 | 3.20 | A-3 | 0.10 | A-4 | 0.10 | A-5 | 0.80 | B-1 | 3.40 | - | | C-1 | 69.0 | D-2 | 0.10 | Methyl ethyl ketone | 33.0 | 90.0 | 58.8 | 76.2 | 100 | 2.4 |
| Example 7 | CPD-7 | A-1 | 2.20 | A-3 | 0.10 | A-4 | 0.10 | A-5 | 1.80 | B-1 | 3.70 | - | | C-1 | 72.0 | D-2 | 0.10 | Methyl ethyl ketone | 33.0 | 90.0 | 58.9 | 52.4 | 100 | 2.4 |
| Example 8 | CPD-8 | A-1 | 2.00 | A-3 | 0.10 | A-4 | 0.10 | A-5 | 2.00 | B-1 | 3.77 | - | | C-1 | 73.0 | D-2 | 0.10 | Methyl ethyl ketone | 33.0 | 90.0 | 59.0 | 47.6 | 100 | 2.4 |
| Example 9 | CPD-9 | A-1 | 4.00 | A-3 | 0.10 | A-4 | 0.10 | - | | B-1 | 2.18 | B-2 | 0.70 | C-1 | 65.0 | D-2 | 0.10 | Methyl ethyl ketone | 33.0 | 90.1 | 59.0 | 95.2 | 75.7 | 2.4 |
| Example 10 | CPD-10 | A-1 | 4.00 | A-3 | 0.10 | A-4 | 0.10 | - | | B-1 | 1.50 | B-2 | 1.18 | C-1 | 63.0 | D-2 | 0.10 | Methyl ethyl ketone | 33.0 | 90.0 | 58.9 | 95.2 | 56.0 | 2.4 |
| Example 11 | CPD-11 | A-1 | 4.00 | A-3 | 0.10 | A-4 | 0.10 | - | | B-1 | 1.20 | B-2 | 1.40 | C-1 | 62.0 | D-2 | 0.10 | Methyl ethyl ketone | 33.0 | 90.0 | 58.8 | 95.2 | 46.2 | 2.4 |
| Example 12 | CPD-12 | A-2 | 4.00 | A-3 | 0.10 | A-4 | 0.10 | - | | B-3 | 2.25 | - | | C-2 | 59.0 | D-2 | 0.10 | Methyl ethyl ketone | 33.0 | 90.0 | 58.6 | 95.2 | 100 | 2.4 |
| Example 13 | CPD-13 | A-2 | 4.00 | A-3 | 0.10 | A-4 | 0.10 | - | | B-3 | 2.25 | - | | C-2 | 81.0 | D-2 | 0.10 | Methyl ethyl ketone | 40.0 | 92.5 | 66.0 | 95.2 | 100 | 2.4 |
| Example 14 | CPD-14 | A-2 | 4.00 | A-3 | 0.10 | A-4 | 0.10 | - | | B-3 | 2.25 | - | | C-2 | 124.0 | D-2 | 0.10 | Methyl ethyl ketone | 60.0 | 95.0 | 74.8 | 95.2 | 100 | 2.4 |
| Example 15 | CPD-15 | A-2 | 2.00 | A-3 | 0.10 | A-4 | 0.10 | A-6 | 2 | B-3 | 2.25 | - | | C-2 | 124.0 | D-2 | 0.10 | Methyl ethyl ketone | 60.0 | 95.0 | 74.8 | 95.2 | 100 | 2.4 |
| Example 16 | CPD-16 | A-2 | 3.60 | A-3 | 0.10 | A-4 | 0.10 | A-6 | 0.4 | B-3 | 2.25 | - | | C-2 | 124.0 | D-2 | 0.10 | Methyl ethyl ketone | 60.0 | 95.0 | 74.8 | 95.2 | 100 | 2.4 |
| Example 17 | CPD-17 | A-2 | 3.60 | A-3 | 0.10 | A-4 | 0.10 | A-7 | 0.8 | B-3 | 2.10 | - | | C-2 | 128.0 | D-2 | 0.10 | Methyl ethyl ketone | 60.0 | 95.0 | 74.7 | 78.3 | 100 | 2.2 |
| Comparative Example 1 | CPD-18 | A-3 | 4.10 | - | | - | | - | | B-2 | 3.10 | - | | C-1 | 65.5 | D-1 | 0.10 | - | | 90.0 | 58.8 | 0.0 | 0 | 2.4 |
| Comparative Example 2 | CPD-19 | A-1 | 4.00 | A-3 | 0.10 | A-4 | 0.10 | - | | B-1 | 3.17 | - | | C-1 | 65.5 | D-3 | 0.12 | Methyl ethyl ketone | 33.0 | 89.9 | 58.5 | 95.2 | 100 | 2.9 |
| Comparative Example 3 | CPD-20 | A-1 | 4.00 | A-3 | 0.10 | A-4 | 0.10 | - | | B-1 | 3.17 | - | | C-1 | 66.5 | D-4 | 0.2 | Methyl ethyl ketone | 33.0 | 89.8 | 58.3 | 95.2 | 100 | 4.8 |
| Comparative Example 4 | CPD-21 | A-1 | 4.00 | - | | - | | - | | B-1 | 2.98 | - | | C-1 | 64.5 | D-4 | 0.2 | Methyl ethyl ketone | 33.0 | 90.0 | 58.8 | 100.0 | 100 | 5.0 |
| Comparative Example 5 | CPD-22 | A-1 | 4.00 | A-3 | 0.10 | A-4 | 0.10 | - | | B-1 | 3.17 | - | | C-1 | 64.5 | D-5 | 0.2 | Methyl ethyl ketone | 33.0 | 89.5 | 57.5 | 95.2 | 100 | 4.8 |
| Comparative Example 6 | CPD-23 | A-1 | 4.00 | A-3 | 0.10 | A-4 | 0.10 | - | | B-1 | 3.17 | - | | - | | D-2 | 0.10 | Methyl ethyl ketone | 33.0 | 0.0 | 0.0 | 95.2 | 100 | 2.4 |
| Comparative Example 7 | CPD-24 | A-2 | 4.00 | A-3 | 0.10 | A-4 | 0.10 | - | | B-3 | 2.25 | - | | C-2 | 124.0 | D-4 | 0.13 | Methyl ethyl ketone | 60.0 | 95.0 | 74.7 | 95.2 | 100 | 3.1 |
| Comparative Example 8 | CPD-25 | A-2 | 4.00 | - | | - | | - | | B-3 | 2.20 | - | | C-2 | 124.0 | D-4 | 0.13 | Methyl ethyl ketone | 60.0 | 95.1 | 75.4 | 100 | 100 | 3.3 |
| Comparative Example 9 | CPD-26 | A-2 | 4.00 | - | | - | | - | | B-3 | 2.20 | - | | C-2 | 78.0 | D-4 | 0.13 | Methyl ethyl ketone | 33.0 | 92.5 | 95.9 | 100 | 100 | 3.3 |
| Comparative Example 10 | CPD-27 | A-2 | 4.00 | - | | - | | - | | B-3 | 2.20 | - | | C-2 | 25.0 | D-4 | 0.13 | Methyl ethyl ketone | 33.0 | 79.8 | 38.3 | 100 | 100 | 3.3 |

[Table 6]

| Example/ Comparative Example | Bonded magnet compound | Peak top temperature (X) | Peak top temperature (Y) after pressurization | (X) - (Y) | Anchorage strength ($N/mm^2$) | Storage stability (%) | Blocking property |
|---|---|---|---|---|---|---|---|
| Example 1 | CPD-1 | 165 | 154 | 11 | A | A | A |
| Example 2 | CPD-2 | 165 | 156 | 9 | A | A | A |
| Example 3 | CPD-3 | 165 | 158 | 7 | A | A | A |
| Example 4 | CPD-4 | 165 | 160 | 5 | B | A | B |
| Example 5 | CPD-5 | 165 | 162 | 3 | B | A | B |
| Example 6 | CPD-6 | 165 | 156 | 9 | A | A | B |
| Example 7 | CPD-7 | 165 | 159 | 6 | A | A | B |
| Example 8 | CPD-8 | 165 | 160 | 5 | B | A | C |
| Example 9 | CPD-9 | 165 | 157 | 8 | A | A | B |
| Example 10 | CPD-10 | 165 | 160 | 5 | A | A | C |
| Example 11 | CPD-11 | 165 | 162 | 3 | B | A | D |
| Example 12 | CPD-12 | 166 | 153 | 13 | A | A | A |
| Example 13 | CPD-13 | 166 | 153 | 13 | B | A | A |
| Example 14 | CPD-14 | 166 | 152 | 14 | C | A | A |
| Example 15 | CPD-15 | 166 | 152 | 14 | C | A | A |
| Example 16 | CPD-16 | 166 | 152 | 14 | C | A | A |
| Example 17 | CPD-17 | 166 | 152 | 14 | C | A | A |

(continued)

| Example/ Comparative Example | Bonded magnet compound | Peak top temperature (X) | Peak top temperature (Y) after pressurization | (X) - (Y) | Anchorage strength (N/mm$^2$) | Storage stability (%) | Blocking property |
|---|---|---|---|---|---|---|---|
| Comparative Example 1 | CPD-18 | 119 | 119 | 0 | D | Not anchored | D |
| Comparative Example 2 | CPD-19 | 139 | 139 | 0 | E | E | A |
| Comparative Example 3 | CPD-20 | 165 | 165 | 0 | D | D | A |
| Comparative Example 4 | CPD-21 | 165 | 165 | 0 | D | D | A |
| Comparative Example 5 | CPD-22 | 127 | 127 | 0 | E | Not anchored | A |
| Comparative Example 6 | CPD-23 | 165 | 163 | 2 | E | A | D |
| Comparative Example 7 | CPD-24 | 165 | 165 | 0 | E | D | A |
| Comparative Example 8 | CPD-25 | 165 | 165 | 0 | E | D | A |
| Comparative Example 9 | CPD-26 | 165 | 165 | 0 | E | D | A |
| Comparative Example 10 | CPD-27 | 165 | 165 | 0 | E | D | B |

As shown in Tables 5 and 6, Examples using a compound including an epoxy resin (A), a magnetic particle (C), and a curing agent (D), wherein in differential scanning calorimetry, when an exothermic peak temperature in a calorimetric curve at a temperature increase rate of 2°C/min of the compound is defined as (X), and an exothermic peak temperature in a calorimetric curve at a temperature increase rate of 2°C/min after the compound is pressurized at 200 MPa for 5 minutes is defined as (Y), (X) and (Y) satisfy the expression (1) and the expression (2), were excellent in storage stability and also exhibited high anchorage strength for a metal member in the curing reaction of a thermosetting resin under a low-temperature condition.

On the other hand, Comparative Examples with a value of (X) - (Y) of less than 3 were inferior in storage stability and also inferior in anchorage strength for a metal member in the curing reaction of a thermosetting resin under a low-temperature condition.

The present invention may include the following embodiments.

<1> A bonded magnet compound including an epoxy resin (A), a curing agent (B), a magnetic particle (C), and a curing accelerator, wherein

in differential scanning calorimetry, when an exothermic peak temperature in a calorimetric curve at a temperature increase rate of 2°C/min of the bonded magnet compound is defined as (X), and
an exothermic peak temperature in a calorimetric curve at a temperature increase rate of 2°C/min after the bonded magnet compound is pressurized at 200 MPa for 5 minutes is defined as (Y),
(X) and (Y) satisfy the following expression (1) and expression (2):

$$100 \leq (X) \leq 200 \ldots (1),$$

and

$$(X) - (Y) \geq 3 \ldots (2).$$

<2> The bonded magnet compound according to <1>, wherein

the epoxy resin (A) includes an epoxy resin that is in a solid state at room temperature, and
a content of the epoxy resin is 50% by mass or more based on the total amount of the epoxy resin (A).

<3> The bonded magnet compound according to <1> or <2>, wherein

the curing agent (B) includes a curing agent that is in a solid state at room temperature, and
a content of the curing agent is 50% by mass or more based on the total amount of the curing agent.

<4> The bonded magnet compound according to any one of <1> to <3>, wherein a content of the magnetic particle (C) is 40% by volume or more and 95% by volume or less based on the total volume of the bonded magnet compound.

<5> The bonded magnet compound according to any one of <1> to <4>, wherein the magnetic particle (C) is a rare earth magnetic particle.

<6> The bonded magnet compound according to any one of <1> to <5>, wherein the curing accelerator (D) includes a microencapsulated latent accelerator.

<7> The bonded magnet compound according to any one of <1> to <6>, wherein a content of the curing accelerator(D) is 0.1 parts by mass or more and 15.0 parts by mass or less per 100 parts by mass of the epoxy resin (A).

<8> A bonded magnet compound including an epoxy resin (A), a curing agent (B), a magnetic particle (C), and a curing accelerator (D), wherein
the curing accelerator (D) is a microencapsulated latent accelerator.

The disclosure of Japanese Patent Application No. 2020-106880 filed on July 13, 2023 is incorporated herein by reference in its entirety. All literatures, patent applications, and technical standards described herein are incorporated herein by referent to the same extent as if each individual literature, patent application, or technical standard is specifically and individually indicated to be incorporated by reference.

**Industrial Applicability**

The compound of the present invention has industrial applicability as materials for various bonded magnets.

**Reference Signs List**

1: Pellet

2: Steel plate

**Claims**

**1.** A compound comprising an epoxy resin (A), a magnetic particle (C), and a curing agent (D), wherein

in differential scanning calorimetry, when an exothermic peak temperature in a calorimetric curve at a temperature increase rate of 2°C/min of the compound is defined as (X), and
an exothermic peak temperature in a calorimetric curve at a temperature increase rate of 2°C/min after the compound is pressurized at 200 MPa for 5 minutes is defined as (Y),
(X) and (Y) satisfy the following expression (1) and expression (2):

$$100 \leq (X) \leq 200 \ldots (1),$$

and

$$(X) - (Y) \geq 3 \ldots (2).$$

**2.** The compound according to claim 1, wherein the curing agent (D) comprises an encapsulated curing agent.

**3.** The compound according to claim 1, wherein a content of the curing agent (D) is 0.1 parts by mass or more and 15.0 parts by mass or less per 100 parts by mass of the epoxy resin (A).

**4.** The compound according to claim 2, wherein a core component of the curing agent (D) is a solid.

**5.** The compound according to claim 1, wherein the curing agent (D) comprises an amine-epoxy adduct.

**6.** The compound according to claim 5, wherein the amine-epoxy adduct comprises an adduct of an imidazole compound and bisphenol A-type epoxy resin.

**7.** The compound according to claim 1, further comprising a curing agent (B).

**8.** The compound according to claim 7, wherein

the curing agent (B) comprises a curing agent that is in a solid state at room temperature, and
a content of the curing agent that is in a solid state at room temperature is 50% by mass or more based on the total amount of the curing agent (B).

**9.** The compound according to claim 1, wherein the epoxy resin (A) comprises a structure represented by the following formula (A1):

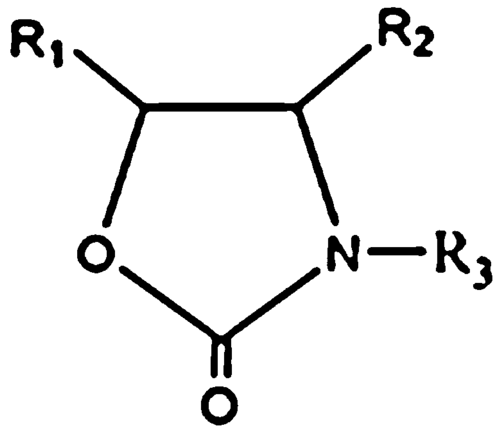

(A 1)

wherein $R_1$ to $R_3$ are each independently a hydrogen atom, an alkyl group, an aromatic group, a substituent containing a heteroatom, or a substituent containing a halogen atom, at least one of $R_1$ to $R_3$ contains a reactive group for the curing agent (D), and $R_1$ to $R_3$ are the same as or different from each other.

**10.** The compound according to claim 1, wherein the epoxy resin (A) comprises a structure represented by the following formula (A2):

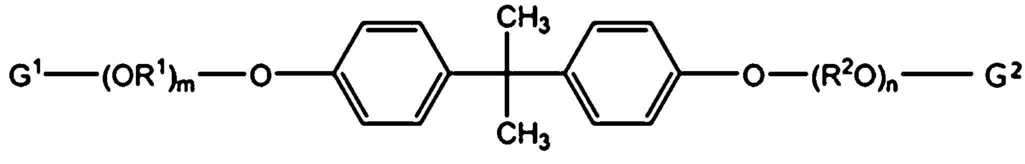

(A 2)

wherein each of $R_1$ and $R^2$ is an alkyl group having 1 to 12 carbon atoms, m and n are each independently an integer of 1 or larger, each of $G^1$ and $G^2$ is one member selected from the group consisting of a hydrogen atom, an alkyl group, an aromatic group, a substituent containing a heteroatom, and a substituent containing a halogen atom, and $G^1$ and $G^2$ are the same as or different from each other.

**11.** The compound according to claim 1, wherein

the epoxy resin (A) comprises an epoxy resin that is in a solid state at room temperature, and
a content of the epoxy resin that is in a solid state at room temperature is 50% by mass or more based on the total amount of the epoxy resin (A).

**12.** The compound according to claim 1, wherein the magnetic particle (C) is a rare earth magnetic particle.

**13.** A compound comprising an epoxy resin (A), a magnetic particle (C), and a curing agent (D), wherein the curing agent (D) is an encapsulated curing agent.

**14.** The compound according to claim 13, further comprising a curing agent (B).

**15.** The compound according to claim 13, wherein

a core component of the curing agent (D) is a solid,
the curing agent (D) comprises an amine-epoxy adduct, and
the amine-epoxy adduct comprises an adduct of an imidazole compound and bisphenol A-type epoxy resin.

**16.** A varnish comprising an epoxy resin (A), a curing agent (B), a curing agent (D), and an organic solvent (E), wherein

the curing agent (D) comprises an encapsulated curing agent,
a core component of the curing agent (D) is a solid,
the curing agent (D) comprises an amine-epoxy adduct, and
the amine-epoxy adduct comprises an adduct of an imidazole compound and bisphenol A-type epoxy resin.

**17.** A bonded magnet obtained by molding and curing the compound according to any one of claims 1 to 15.

**18.** A motor comprising a bonded magnet according to claim 17.

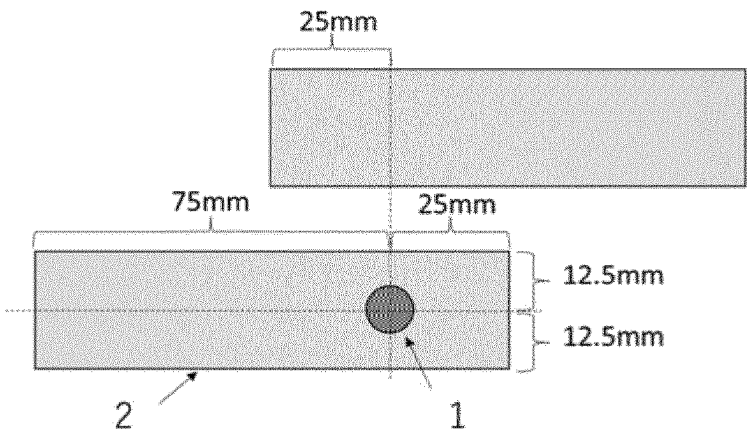


FIG.1

## INTERNATIONAL SEARCH REPORT

International application No.
**PCT/JP2024/025356**

**A. CLASSIFICATION OF SUBJECT MATTER**

***H01F 1/08***(2006.01)i; ***C08G 59/68***(2006.01)i; ***H01F 41/02***(2006.01)i
FI: H01F1/08 130; H01F41/02 G; C08G59/68

According to International Patent Classification (IPC) or to both national classification and IPC

**B. FIELDS SEARCHED**

Minimum documentation searched (classification system followed by classification symbols)

H01F1/08; C08G59/68; H01F41/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2012/118001 A1 (HITACHI METALS LTD.) 07 September 2012 (2012-09-07) paragraphs [0021]-[0084], fig. 1-7 | 1-12 |
| Y | paragraphs [0021]-[0084], fig. 1-7 | 13-18 |
| A | JP 2006-100560 A (NEOMAX CO., LTD.) 13 April 2006 (2006-04-13) paragraph [0014] | 1-12 |
| Y | paragraph [0014] | 13-18 |
| A | JP 2021-152108 A (AJINOMOTO CO., INC.) 30 September 2021 (2021-09-30) paragraph [0123] | 1-12 |
| Y | | 13-18 |
| A | JP 2007-235017 A (MATSUSHITA ELECTRIC INDUSTRIAL CO., LTD.) 13 September 2007 (2007-09-13) entire text, all drawings | 1-18 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 September 2024** | **01 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

## INTERNATIONAL SEARCH REPORT

International application No.
**PCT/JP2024/025356**

**C. DOCUMENTS CONSIDERED TO BE RELEVANT**

| Category* | Citation of document, with indication, where appropriate, of the relevant passages | Relevant to claim No. |
|---|---|---|
| A | JP 2022-139977 A (ASAHI KASEI KABUSHIKI KAISHA) 26 September 2022 (2022-09-26) entire text, all drawings | 1-18 |

Form PCT/ISA/210 (second sheet) (July 2022)

**INTERNATIONAL SEARCH REPORT**
**Information on patent family members**

International application No.
**PCT/JP2024/025356**

| Patent document cited in search report | Publication date (day/month/year) | Patent family member(s) | Publication date (day/month/year) |
|---|---|---|---|
| WO 2012/118001 A1 | 07 September 2012 | US 2013/0323109 A1 paragraphs [0029]-[0084], fig. 1-7<br>CN 103403821 A | |
| JP 2006-100560 A | 13 April 2006 | (Family: none) | |
| JP 2021-152108 A | 30 September 2021 | CN 113444340 A<br>KR 10-2021-0119324 A | |
| JP 2007-235017 A | 13 September 2007 | (Family: none) | |
| JP 2022-139977 A | 26 September 2022 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6606908 B
- JP 2020106880 A